# FASCICULE DE BREVET EUROPEEN

(11) **EP 4 111 830 B1**
(45) Date de publication et mention de la délivrance du brevet: **03.04.2024**
(21) Numéro de dépôt: 21711618.5
(22) Date de dépôt: 24.02.2021
(51) Int. Cl.: H05H 1/00, H05H 1/48

(54) **DISPOSITIF DE GÉNÉRATION DE PLASMA À BASE DE FIBRES OPTIQUES COMPOSITES**
PLASMAERZEUGUNGSVORRICHTUNG AUF DER BASIS VON OPTISCHEN VERBUNDFASERN
COMPOSITE OPTICAL FIBRE BASED PLASMA GENERATION DEVICE

(30) Priorité: 25.02.2020 FR 2001831
(43) Date de publication de la demande: 04.01.2023
(73) Titulaire: UNIVERSITE DE BORDEAUX, 33000 Bordeaux (FR); Centre National de la Recherche Scientifique (CNRS), 75016 Paris (FR); INSTITUT POLYTECHNIQUE DE BORDEAUX, 33400 Talence (FR); Université de Limoges, 87032 Limoges (FR); Université de Bourgogne, 21000 Dijon (FR)
(72) Inventeur: DANTO, Sylvain, 33700 MERIGNAC (FR); STRUTYNSKI, Clément, 33400 TALENCE (FR); DESEVEDAVY, Frédéric, 21000 DIJON (FR); TEULE-GAY, Lionel, 33000 BORDEAUX (FR); COUDERC, Vincent, 87430 VERNEUIL SUR VIENNE (FR); SMEKTALA, Frédéric, 21560 REMILLY SUR TILLE (FR); CARDINAL, Thierry, 33770 SALLES (FR)
(74) Mandataire: Plasseraud IP
(86) Numéro de dépôt international: PCT/FR2021/050322
(87) Numéro de publication internationale: WO 2021/170955

(56) Documents cités:
- FR-A1- 3 064 076
- JP-A- 2007 207 477
- US-A- 6 034 781
- JAE YOUNG KIM ET AL: "Apoptosis of lung carcinoma cells induced by a flexible optical fiber-based cold microplasma", BIOSENSORS AND BIOELECTRONICS, ELSEVIER SCIENCE LTD. UK, AMSTERDAM, NL, vol. 28, no. 1, 18 juillet 2011 (2011-07-18), pages 333-338, XP028340794, ISSN: 0956-5663, DOI: 10.1016/J.BIOS.2011.07.039 [extrait le 2011-07-22]
- ZHENGGANG LIAN ET AL: "Nanomechanical Optical Fiber with Embedded Electrodes Actuated by Joule Heating", MATERIALS, vol. 7, no. 8, 31 juillet 2014 (2014-07-31), pages 5591-5602, XP055437861, DOI: 10.3390/ma7085591
- GIANCARLO CHESINI ET AL: "All-fiber devices based on photonic crystal fibers with integrated electrodes", OPTICS EXPRESS, vol. 17, no. 3, 2 février 2009 (2009-02-02), page 1660, XP055299222, US ISSN: 2161-2072, DOI: 10.1364/OE.17.001660

## Description

### Domaine technique

La présente invention concerne de manière générale le domaine des systèmes de génération de plasma.

Elle concerne plus particulièrement un dispositif équipé d'un guide d'onde électrique et optique à base de fibres optiques composites permettant à la fois la transmission d'un courant électrique, pour générer un champ électrique ou un plasma au voisinage d'une zone d'analyse d'un échantillon, et la détection et la transmission d'un signal lumineux émis par le plasma ou par ladite zone d'étude excité par le champ électrique vers une unité d'analyse du signal lumineux.

Elle concerne en particulier un dispositif de spectroscopie de plasma comprenant un guide d'onde électrique et optique adapté à générer un plasma au voisinage d'une zone d'analyse d'un échantillon et à détecter un signal lumineux émis par le plasma et à acheminer le signal lumineux vers un spectromètre optique pour l'analyse du spectre lumineux dudit signal.

### Technique antérieure

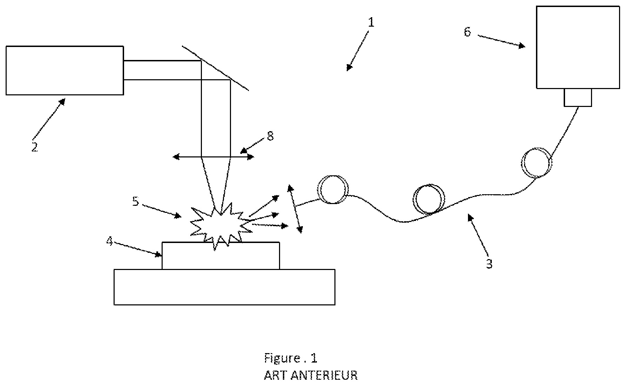

Une technique connue de spectroscopie de plasma est la spectroscopie de plasma induit par laser, connue sous son acronyme LIBS pour « Laser-Induced Breakdown Spectroscopy ». Le principe de fonctionnement de LIBS est illustré sur la figure 1. Il consiste à focaliser sur un échantillon 4 une impulsion lumineuse délivrée par un laser 2 à l'aide d'un système de focalisation 8. L'impulsion a une durée de quelques nanosecondes pour une énergie de quelques dizaines de millijoules. En la focalisant, lorsque la densité surfacique d'énergie à la surface de l'échantillon devient suffisante pour dépasser le seuil de claquage de l'échantillon à analyser, la matière est localement chauffée puis vaporisée par le faisceau laser, ce qui conduit à la formation d'un plasma 5 à la surface de l'échantillon dans la région de la focalisation. Les espèces excitées contenues dans le plasma, des ions, des atomes ou des molécules émettent des raies caractéristiques qui sont collectées par une fibre optique 3 reliée à un spectromètre 6. L'analyse spectrale du spectre collecté dans le domaine UV/visible permet d'extraire des informations qualitatives et quantitatives sur la composition de l'échantillon. De plus, un exemple de l'art antérieur selon le préambule de la revendication 1 est divulgué par le document JP 2007-207477 A

Les appareils de l'état de la technique mettant en oeuvre la technique LIBS comprennent donc généralement un système de focalisation d'un faisceau laser sur l'échantillon et un système de collection et d'analyse par spectroscopie des rayons lumineux émis par le plasma, un système de déplacement de la fibre optique afin d'ajuster la direction de visée de la fibre optique de collection des raies par rapport au plasma.

Ces appareils utilisent donc un faisceau lumineux incident sur l'échantillon en visée directe et en espace libre, il n'est donc pas possible de réaliser des mesures d'informations d'une région cible d'intérêt située dans une zone difficile d'accès. La configuration de ces appareils empêche donc des mesures par la voie endoscopique.

Un autre inconvénient de ces appareils est qu'ils nécessitent l'utilisation d'un système de visée pour assurer l'alignement entre le trajet optique de la fibre optique et la zone de focalisation du faisceau lumineux incident, ce qui se traduit par une augmentation de leur encombrement et de leur coût.

Afin de remédier aux inconvénients précités de l'état de la technique, la présente invention a pour objet un dispositif d'émission de plasma et de collecte de signal lumineux simple et rapide à mettre en oeuvre. Un autre objectif de la présente invention est de proposer un dispositif d'émission plasma et de collecte de signal lumineux entièrement à base de fibres optiques permettant une intégration facile dans une tête endoscopique pour réaliser des mesures par voie endoscopique, même dans des zones d'analyse difficiles d'accès.

### Exposé de l'invention

Il est proposé un dispositif de génération d'un plasma et de détection d'un signal lumineux, le plasma étant destiné à être généré au voisinage d'une zone d'étude d'un échantillon et le signal lumineux provenant de ladite zone d'étude, le dispositif comprenant :
- un générateur de courant;
- une unité d'analyse ;
- un guide d'onde électrique et optique comprenant des moyens de transmission d'un courant électrique configurés pour générer un plasma à une extrémité desdits moyens de transmission de courant électrique au voisinage de ladite zone d'étude, des moyens de détection et de transmission configurés pour détecter et transmettre le signal lumineux provenant de ladite zone d'étude vers l'unité d'analyse, et une gaine optique, lesdits moyens de transmission de courant électrique et lesdits moyens de détection et de transmission dudit signal lumineux étant logés dans la gaine optique.

Selon un premier mode de réalisation de l'invention, le guide d'onde électrique et optique comprend :
- une fibre composite présentant un axe principal longitudinal (AA') et comprenant au moins deux âmes conductrices électriquement et la gaine optique, les âmes étant placées parallèlement à l'axe longitudinal (AA') et logées dans la gaine optique et configurées pour être soumises à une différence de potentiel électrique pour générer un plasma aux extrémités des âmes constructrices au voisinage de la zone d'étude et
- au moins une fibre optique configurée pour détecter et transmettre le signal lumineux à l'unité d'analyse, ladite fibre optique comprenant au moins une portion logée dans ladite gaine optique et agencée parallèlement à l'axe principal longitudinal entre les deux âmes conductrices, les extrémités des âmes conductrices et de la fibre optique destinées à venir se placer au voisinage de la zone d'étude étant alignées.

Selon une forme de réalisation de l'invention, la fibre composite et la fibre optique sont coaxiales suivant l'axe principal longitudinal.

Selon une autre forme de réalisation de l'invention, la fibre composite comprend un trou débouchant s'étendant suivant l'axe principal longitudinal, une portion de ladite fibre optique étant placée dans ledit trou.

Selon une autre forme de réalisation de l'invention, la fibre optique est une fibre optique monomode ou multimode.

Selon une autre forme de réalisation de l'invention, la fibre optique est fixée à la gaine optique de la fibre composite par collage.

Selon un autre mode de réalisation de l'invention, le guide d'onde optique électrique et optique comprend :
- une fibre optique composite présentant un axe principal longitudinal (AA'), ladite fibre optique composite comprenant au moins deux âmes conductrices électriquement, au moins un coeur optique et une gaine optique, les âmes conductrices étant placés parallèlement à l'axe longitudinal et logées dans la gaine optique et configurées pour être soumises à une différence de potentiel électrique pour générer un plasma aux extrémités des âmes constructrices au voisinage de la zone d'étude, ledit au moins un coeur optique étant logé dans la gaine optique et configuré pour détecter et transmettre le signal lumineux à l'unité d'analyse.

Les caractéristiques exposées dans les paragraphes suivants peuvent, optionnellement, être mises en oeuvre. Elles peuvent être mises en oeuvre indépendamment les unes des autres ou en combinaison les unes avec les autres :
- le coeur optique est en verre choisi parmi les verres suivants : verre de tellure, verre de phosphate, verre de boro-phosphate, verre de chalogénure,
- une extrémité des âmes conductrices est connectée au générateur de courant par une liaison électrique externe,
- les parois latérales des âmes conductrices sont connectées au générateur de courant à travers une découpe de la gaine optique par une liaison électrique externe,
- les âmes conductrices sont en matériau métallique choisi parmi les métaux suivants : étain, un alliage à base d'étain,
- la gaine optique est en verre choisi parmi les verres suivants : verre de tellure, verre de phosphate, verre de boro-phosphate, verre de chalogénure,
- la gaine optique est en polymère choisi parmi les polymères suivants : polyéther sulfones (PES), polysulfones (PSU), Polyméthacrylate de méthyle (PMMA).

Selon une forme de réalisation de l'invention, le dispositif étant un dispositif permettant des mesures spectroscopiques de plasma, l'unité d'analyse est un spectromètre optique pour réaliser des mesures spectroscopiques de plasma.

Un autre aspect de l'invention concerne un procédé de mesures spectroscopiques de plasma mettant en oeuvre le dispositif défini ci-dessous et lorsque l'unité d'analyse est un spectromètre optique, comprenant les étapes suivantes :
- fourniture d'un courant continu dans le guide d'onde électrique et optique pour générer aux extrémités dudit guide d'onde au voisinage de la zone d'étude un plasma ;
- détection d'un signal lumineux émis par le plasma par les extrémités duit guide d'onde électrique et optique ;
- transmission du signal lumineux par ledit guide d'onde électrique et optique vers le spectromètre ;
- analyse spectral du signal lumineux par le spectromètre.

### Brève description des dessins

D'autres caractéristiques, détails et avantages de l'invention apparaîtront à la lecture de la description détaillée ci-après, et à l'analyse des dessins annexés, sur lesquels :
**Fig. 1**
   [Fig. 1] montre une vue schématique d'un dispositif de spectroscopie de plasma de l'état de la technique;
**Fig. 2**

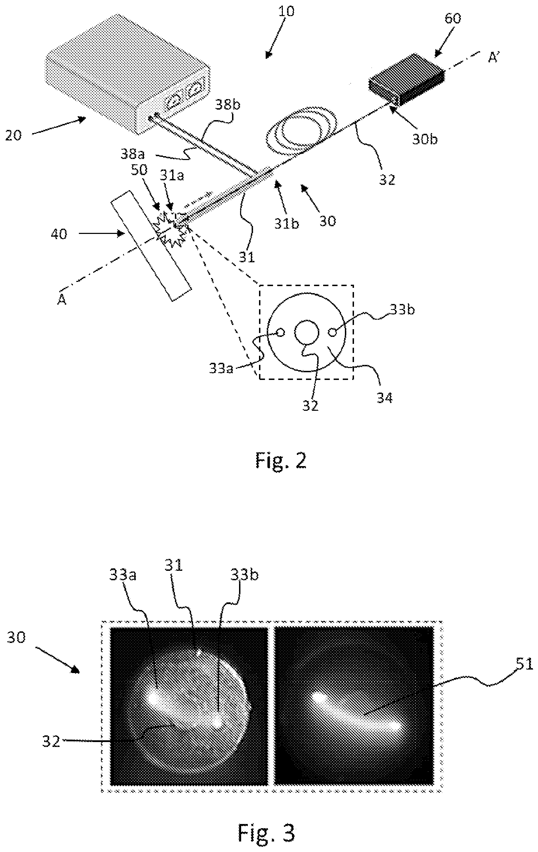

   [Fig. 2] montre une vue schématique illustrant un dispositif de génération de plasma et de détection de signal lumineux selon un mode de réalisation de l'invention ;
**Fig. 3**
   [Fig. 3] montre deux images représentant une vue de face de l'extrémité proximale d'un guide d'onde optique et électrique de la figure 2 avec la formation d'un arc électrique entre les extrémités proximales des deux âmes conductrices électriquement lorsqu'une différence de potentiel électrique est appliquée entre les deux âmes ;
**Fig. 4**

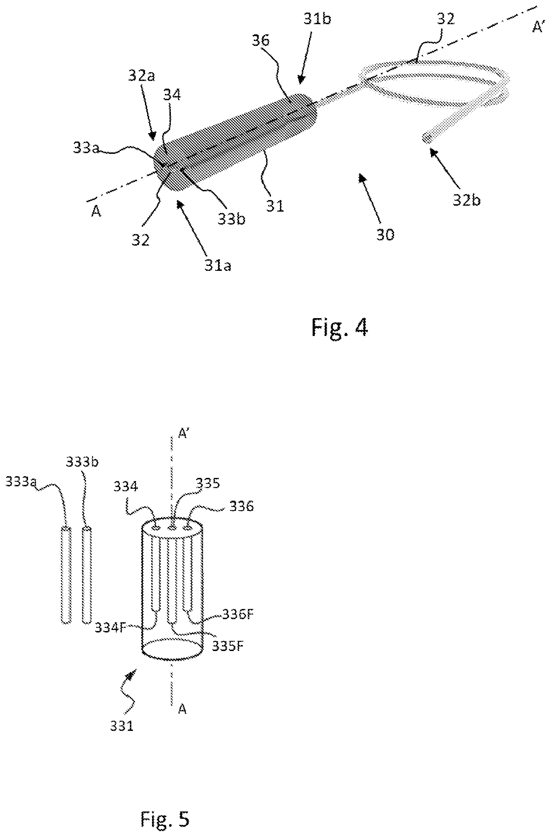

   [Fig. 4] montre une vue en perspective du guide d'onde optique et électrique de la figure 2 ;
**Fig. 5**
   [Fig. 5] illustre une préforme présentant un trou central et deux trous ainsi que deux fils métalliques avant leur insertion dans les trous correspondants pour obtenir une préforme composite ;
**Fig. 6**

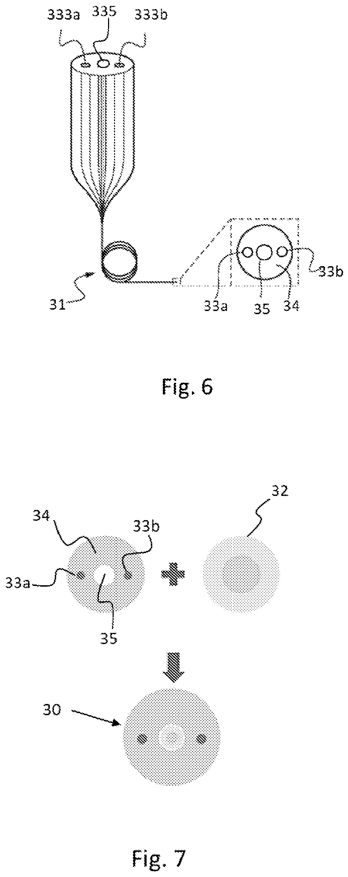

   [fig. 6] illustre la préforme composite de la figure 5 pendant l'étape de fibrage ainsi qu'une vue de coupe transversale de la fibre composite résultante ;
**Fig. 7**
   [Fig. 7] illustre l'assemblage entre la fibre composite et une fibre optique non composite pour former le guide d'onde électrique et optique de la figure 2 ;
**Fig. 8**

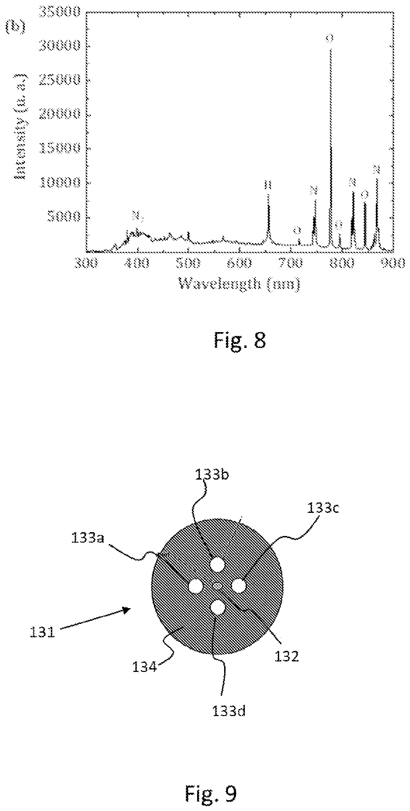

   [Fig. 8] représente un spectre d'intensité en fonction de la longueur d'onde d'un signal lumineux émis par le plasma obtenu avec le dispositif de la figure 2 avec les principales raies d'émission des espèces contenus dans l'atmosphère ;
**Fig. 9**
   [Fig. 9] montre une vue de face d'un guide d'onde électrique et optique formé à partir d'une fibre optique composite comprenant un coeur optique central et quatre âmes conductrices électriquement ;
**Fig. 10**

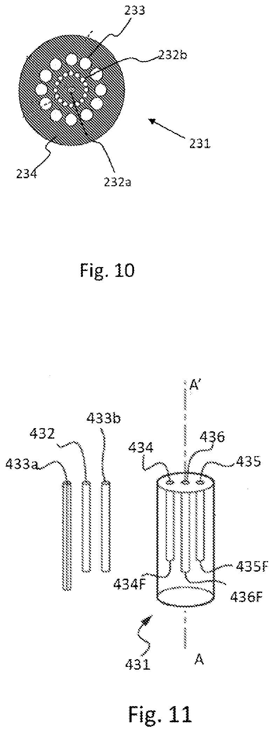

   [Fig. 10] montre une vue de face d'un guide d'onde électrique et optique formé à partir d'une fibre optique composite comprenant plusieurs coeurs optiques entourés d'une pluralité d'âmes conductrices électriquement ;
**Fig. 11**
   [Fig. 11] illustre une préforme composite présentant trois trous ainsi qu'un capillaire optique et deux fils métalliques avant leur insertion ;
**Fig. 12**

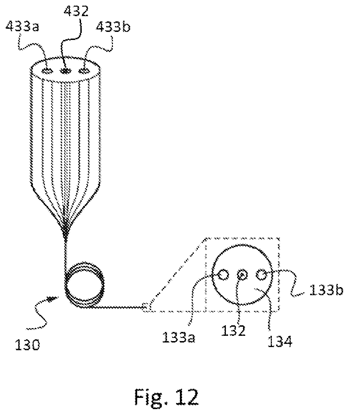

   [Fig. 12] illustre la préforme composite de la figure 11 pendant l'étape de fibrage ainsi qu'une vue de section transversale de la fibre optique composite résultante.

### Description des modes de réalisation

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

Afin de faciliter la compréhension de la description, quelques définitions de termes techniques sont incluses ci-dessous.

Un guide d'onde optique et électrique est un guide d'onde qui permet de conduire à la fois un signal lumineux et un courant électrique.

Une fibre composite est un fil cylindrique comprenant une gaine optique entourant au moins une âme conductrice électriquement qui permet de conduire un courant électrique. La gaine optique est en verre ou en polymère et l'âme est en métal. Un éventuel revêtement entoure la gaine optique permettant d'assurer la tenue mécanique de la fibre composite.

Une fibre optique composite est un fil cylindrique comprenant une gaine optique entourant au moins une âme conductrice électriquement et au moins un coeur optique. La gaine optique est en verre ou en polymère. L'âme conductrice électriquement est en métal. Le coeur optique est en verre. Un revêtement entoure la gaine optique permettant d'assurer la tenue mécanique de la fibre composite.

Une fibre optique est un fil cylindrique comprenant une gaine optique entourant au moins un coeur optique qui permet de conduire un signal lumineux. Un revêtement entoure la gaine optique permettant d'assurer la tenue mécanique de la fibre optique.

Les verres présentent une température de transition vitreuse T_{g}.

Les métaux présentent une température de fusion Tₘ.

Dans la présente divulgation, on entend par extrémité proximale l'extrémité la plus proche de la surface de la zone d'étude de l'échantillon à analyser et par extrémité distale l'extrémité la plus éloignée de la surface de la zone d'étude de l'échantillon à analyser.

Il est maintenant fait référence à la figure 2 qui illustre un dispositif 10 de génération de plasma et de détection d'un signal lumineux selon un mode de réalisation de l'invention. Le dispositif comprend un guide d'onde électrique et optique 30 connecté d'une part à un générateur de courant 20 et, d'autre part à une unité d'analyse 60. Le guide d'onde électrique et optique 30 comprend une extrémité proximale destinée à être placée au voisinage d'une zone d'étude d'un échantillon 40 qui peut être un objet, un milieu gazeux confiné ou un tissu biologique.

Le générateur de courant est configuré pour fournir un courant électrique continu dans le guide d'onde pour générer à l'extrémité proximale du guide d'onde électrique et optique un plasma 50 par interaction avec l'échantillon.

Le plasma émet un signal lumineux caractéristique de l'échantillon, dans un domaine de longueur d'onde allant de 300 nm à 1000 nm. Le signal lumineux est collecté directement par l'extrémité proximale du guide d'onde électrique et optique qui le transmet à l'unité d'analyse.

De manière classique, l'échantillon peut être positionné sur un porte-échantillon, qui peut être manuel ou motorisé, permettant un déplacement de l'échantillon, de préférence dans les trois directions spatiales. L'échantillon peut être déplacé avec une précision micrométrique. Il est ainsi possible d'analyser point par point l'échantillon. Le déplacement de l'échantillon est synchronisé avec le générateur de courant, qui conduit à chaque injection de courant électrique, à l'ablation de l'échantillon et à une vaporisation d'une petite quantité de matière pour former un micro-plasma dans la région de l'échantillon à analyser.

Dans le cas où le dispositif est utilisé en tant que dispositif de spectroscopie de plasma comme l'illustre la figure 2, l'unité d'analyse 60 est un spectromètre optique. Généralement, un spectromètre optique comprend une fente d'entrée alignée avec un réseau de diffraction, un miroir plan qui réfléchit la lumière diffractée sur un ou deux photodétecteurs de type CCD ou analogue qui permet d'obtenir un spectre lumineux. Dans l'exemple de réalisation décrit ci-dessous, le spectromètre est par exemple un spectromètre qui permet de couvrir un domaine spectral allant de 200 nm à 1100 nm.

Selon une première forme de réalisation, le guide d'onde électrique et optique 30 comprend une fibre composite 31 et une fibre optique 32 qui est distincte de la fibre composite. La fibre composite 31 comprend deux âmes conductrices 33a, 33b qui sont configurées pour la transmission d'un courant électrique depuis l'extrémité distale 31b de la fibre composite vers une extrémité proximale 31a de la fibre composite pour la génération du plasma 50 au voisinage de la zone d'étude de l'échantillon. Les âmes sont entourées par une gaine optique 34 de la fibre composite. La fibre optique 32 est configurée pour la détection et la transmission d'un signal lumineux émis par le plasma depuis l'extrémité proximale de la fibre composite vers le spectromètre optique. La fibre optique 32 est logée dans un trou longitudinal suivant l'axe principal de la fibre composite de sorte que la gaine optique entoure également la fibre optique. En outre, une extrémité proximale de la fibre optique 32 est alignée avec l'extrémité proximale des âmes conductrices.

En référence à la figure 3, lorsqu'un courant continu est injecté dans les âmes conductrices par l'intermédiaire du générateur de courant, un arc électrique 51 est généré entre les extrémités proximales des deux âmes conductrices 33a, 33b. Grâce à l'agencement spécifique de la fibre optique 32 et des âmes conductrices 33a, 33b dans la gaine optique, l'arc électrique généré passe devant l'extrémité proximale de la fibre optique. Dit autrement, l'arc électrique est également produit au voisinage de l'extrémité proximale de la fibre optique.

En référence à la figure 4, on décrit plus en détail ci-dessous le guide d'onde optique et électrique 30 de la figure 2. Il comprend une fibre composite 31 et une fibre optique 32 ayant une portion logée dans la gaine optique de la fibre composite 31. La fibre composite 31 est un fil cylindrique s'étendant suivant l'axe principal longitudinal AA'. Elle présente une extrémité proximale 31a et une extrémité distale 31b. L'extrémité proximale 31a est destinée à être placée au voisinage d'une zone d'étude d'un échantillon pendant le fonctionnement du dispositif. La fibre composite comprend une gaine optique 34 dans laquelle sont logées deux âmes conductrices 33a, 33b. Les deux âmes conductrices sont agencées parallèlement à l'axe principal. La gaine optique 34 de la fibre composite comprend également un trou débouchant 35 qui s'étend suivant l'axe principal (figure 7). Une portion de la fibre optique 32 est logée dans le trou débouchant. Cette portion de la fibre optique est agencée dans la gaine optique suivant l'axe principal AA' entre les deux âmes conductrices 33a, 33b. La fibre optique 32 présente également une extrémité proximale 32a et une extrémité distale 32b. De préférence, la portion de la fibre optique logée dans la gaine optique et la fibre composite sont coaxiales suivant l'axe principal. En outre, l'extrémité proximale 32a de la fibre optique et l'extrémité proximale 31a de la fibre composite sont alignées dans un même plan de section transversale. Grâce à cette configuration particulièrement avantageuse, l'extrémité proximale 32a de la fibre optique qui a pour fonction de collecter le signal lumineux est placée entre les extrémités proximales des âmes conductrices qui génèrent le plasma. La visée de la fibre optique passe donc directement par le centre du plasma. Une telle configuration permet à la fibre optique de recueillir le maximum de signal lumineux provenant du plasma.

Pour garantir la stabilité de la fibre optique dans la gaine optique de la fibre composite, la fibre optique est fixée à la gaine optique de la fibre composite par collage aux deux extrémités de la fibre composite.

Les âmes conductrices 33a, 33b sont chacune connectée au générateur de courant par des liaisons électriques externes 38a, 38b comme l'illustre la figure 2. Ces liaisons 38a, 38b sont formées par exemple par des fils de cuivre.

Les figures 2 et 4 illustrent un exemple de connexion électrique externe dite connexion latérale dans laquelle l'extrémité du fil de cuivre est connectée sur une zone de la paroi métallique de l'âme conductrice, à proximité de l'extrémité distale de l'âme conductrice. Pour atteindre la paroi métallique de l'âme conductrice, une découpe 36 de dimension de 0,1 mm² est réalisée sur la paroi de la gaine optique. Le fil de cuivre est inséré dans la découpe et est ensuite collé ou soudé par laser sur la paroi métallique de l'âme conductrice. Les deux contacts électriques sont donc positionnés chacun sur un côté de la fibre composite. Cette connexion électrique externe latérale permet d'isoler spatialement les connexions électriques des deux âmes conductrices.

Selon un autre exemple non illustré, les extrémités distales des âmes conductrices sont connectées aux fils de cuivre par soudage ou par collage. Dans ce cas, les extrémités distales des âmes conductrices sont à l'extérieure de la gaine optique pour être connectées par les liaisons électriques au générateur de courant.

Les figures 5 à 7 illustrent les trois principales étapes de la fabrication d'un guide d'onde électrique et optique de la figure 4. Le procédé comprend une première étape d'obtention d'une préforme composite 331, une deuxième étape de fabrication d'une fibre composte 31 et une troisième étape d'assemblage entre une fibre composite 31 et une fibre optique 32 pour obtenir le guide d'onde électrique et optique.

Dans l'étape d'obtention d'une préforme composite, on obtient tout d'abord une préforme pleine ayant une forme cylindrique de section circulaire, s'étendant sur une longueur de plusieurs centimètres le long d'un axe longitudinal AA'. La préforme présente par exemple une longueur de quelques centimètres et un diamètre de l'ordre du centimètre. La préforme peut par exemple présenter une longueur de 75 mm et des bases de diamètre de 19 mm. On perce une pluralité d'ouvertures sur la base de la préforme pleine. Le perçage est par exemple réalisé mécaniquement ou avec un laser. On perce par exemple un premier trou central non-débouchant 335 de diamètre de 5 mm au centre de la première base de la préforme. Ce premier trou central présente un fond 335F. Puis on perce deux autres trous non-débouchants 334, 336 de diamètre de 1,5 mm placés symétriquement de part et d'autre du premier trou central non-débouchant, les deux autres trous présentant respectivement un fond 334F, 336F. On insère ensuite les deux fils métalliques 333a, 333b dans chacun des trous non-débouchants 334, 336. On obtient une préforme composite 331 avec un trou central 335.

Les fils métalliques sont par exemple constitués d'un métal comme l'étain ou un alliage à base d'étain tel que l'étain-or, l'étain-argent. De préférence, les métaux choisis présentent une température de fusion Tₘ basse. La préforme est en polymère ou en verre. La préforme selon la présente divulgation comprend un verre avec une T_{g} basse, par exemple un verre de chalogénure, un verre de tellure, un verre de fluorure ou un verre phosphate. Les matériaux de la préforme et des fils métalliques sont choisis pour garantir un co-fibrage. La température de fibrage T_{f} est plus élevée que la température de transition vitreuse T_{g} et la température de de fusion des métaux Tₘ.

Dans l'étape de fibrage comme l'illustre la figure 6, la préforme est placée dans un four pour atteindre la température de fibrage de la préforme Tt. Elle est comprise par exemple entre 300°C et 600°C, et est choisie pour être plus élevée que la température de transition vitreuse de la préforme et la température de fusion des métaux. Sous l'effet de la température de fibrage Tf, la préforme devient visqueuse et le fil métallique devient liquide. La préforme composite est étirée et affinée de façon homothétique pour former une fibre composite 31. L'étirage homothétique permet de conserver la géométrie de la préforme composite. A l'issue de cette étape, on obtient une fibre composite 31 de plusieurs mètres et comprenant deux âmes conductrices 33a, 33b noyées dans la gaine optique de la fibre et un trou central 35.

Le diamètre moyen de la fibre est généralement compris entre 500 µm et 1 mm. Le diamètre du trou central est par exemple de 150 µm. Le diamètre des âmes conductrices est par exemple de l'ordre de 50 µm. La dimension du trou central est conçue de manière à ce que la plupart des fibres optiques disponibles dans le commerce puissent y être insérées. Les deux âmes électriques sont par exemple espacées d'une distance de l'ordre de 300 µm.

La préforme pleine et les deux fils métalliques étant étirés simultanément, les âmes conductrices 33a, 33b sont entièrement noyées dans la gaine optique de la fibre composite. C'est à dire les âmes conductrices sont entièrement en contact avec la gaine optique de la fibre le long de la fibre composite.

Dans l'étape d'assemblage de la fibre composite et de la fibre optique pour former le guide d'onde électrique et optique 30, une portion de la fibre composite d'environ 5 cm par exemple est sélectionnée et on insère la fibre optique 32 dans le trou 35 débouchant de la fibre composite. A une extrémité du guide d'onde qui est destinée à former l'extrémité proximale du guide d'onde, l'extrémité de la fibre composite, l'extrémité des âmes conductrices et l'extrémité de la fibre optique sont alignées, c'est-à-dire se trouvant sur un même plan selon une section transversale. Pour assurer la stabilité de la fibre optique dans le trou de la gaine optique, on applique, par exemple, une résine Epoxy aux extrémités de la fibre composite au niveau du trou pour fixer la fibre optique à la gaine optique de la fibre composite.

A l'issue de cette étape d'assemblage, on obtient un guide d'onde électrique et optique 30 comprenant deux âmes conductrices 33a, 33b noyées dans la gaine optique 34 de la fibre composite et une fibre optique 32 logée dans un trou de la gaine optique 34. Les deux âmes conductrices sont utilisées en tant qu'électrodes pour conduire un courant électrique afin de générer un plasma à l'extrémité proximale du guide d'onde, et la fibre optique est utilisée pour collecter et transmettre un signal lumineux émis par le plasma vers l'unité d'analyse qui est par exemple un spectromètre.

Grâce à l'utilisation d'un tel guide d'onde électrique et optique, il n'est plus nécessaire d'ajuster la position de la fibre optique afin que la ligne de visée de la fibre passe par le centre de l'émission globale du plasma. La position optimale de la fibre optique est réalisée automatiquement lors de la fabrication du guide d'onde électrique et optique. En effet, les âmes conductrices sont placées de part et d'autre de la fibre optique dans la gaine optique de sorte que lorsqu'une différence de potentiel électrique est appliquée entre les âmes électriques, l'arc électrique formé entre les extrémités proximales des âmes conductrices passe devant l'extrémité proximale de détection de la fibre optique comme l'illustre la figure 3.

On va maintenant décrire un procédé de mesures spectroscopiques d'un plasma généré dans l'air ambiant au moyen du dispositif de spectroscopie de plasma de la figure 2. L'atmosphère a été enrichie en argon, azote et oxygène.

Dans cet exemple, la gaine optique de la fibre composite est en polyethersulfone (PES) dont la température de transition vitreuse est autour de 225 °C. Les deux âmes conductrices sont ici deux électrodes en étain dont la température de fusion est autour de 232 °C, ce qui est compatible avec la température de fibrage. Le diamètre de la gaine optique est de 620 µm. Le diamètre des deux âmes conductrices est de 50 µm. La fibre optique est une fibre optique multimode en silice qui présente une ouverture numérique de 0,22. Le spectromètre est un spectromètre fibré qui couvre un domaine spectral compris entre 200-1100 nm. Un courant continu de 0,2 mA est appliqué pour générer le plasma.

Dans une première étape du procédé de mesures spectroscopiques de plasma de l'invention, l'extrémité proximale du guide d'onde électrique et optique 30 est placée au voisinage de la zone d'étude. C'est dans cette zone d'étude que l'on cherche à déterminer la présence de composés chimiques.

Dans une seconde étape, on fournit un courant continu de 0,2 mA dans les âmes conductrices du guide d'onde pour générer un plasma à l'extrémité du guide d'onde par interaction entre le champ électrique et le milieu. Les espèces de la zone d'étude excitées par le plasma émettent un signal lumineux.

Dans une troisième étape, le signal lumineux est alors collecté par l'extrémité proximale de la fibre optique du guide d'onde électrique et optique et transmis vers le spectromètre pour son analyse.

On a représenté sur la figure 8 la courbe représentant le signal lumineux délivré par les moyens de traitement du spectromètre. Sur la courbe, on trouve en abscisse la longueur d'onde du spectre, et en ordonnée la valeur, en unité arbitraire, l'intensité du signal lumineux.

On a référencé sur la courbe les différentes longueurs d'onde caractéristiques pour lesquelles l'intensité présente un maximum, ou un « pic ». En fonction de la position des longueurs d'onde caractéristiques dans le spectre lumineux mesuré, il est possible d'identifier de manière connue quelles espèces détectées dans la zone d'étude. La courbe de la figure 8 présente par exemple des pics caractéristiques de l'argon, l'azote, l'oxygène et d'hydrogène entre 650 nm et 900 nm.

Les figures 9 et 10 illustrent une deuxième forme de réalisation du guide d'onde électrique et optique utilisé dans le dispositif de la figure 2. Le guide d'onde électrique et optique comprend une fibre optique composite comprenant une gaine optique dans laquelle sont noyées au moins deux âmes conductrices électriquement pour la transmission de courant électrique et au moins un coeur optique pour la transmission de signal lumineux.

Les connexions de ce guide d'onde électrique et optique au générateur de courant et à l'unité d'analyse telle que le spectromètre optique sont similaires au premier mode de réalisation de la figure 2.

La connexion électrique d'un tel guide d'onde est réalisée par une connexion latérale dans laquelle l'extrémité du fil de cuivre est connectée sur une zone de la paroi métallique de l'âme conductrice, à travers d'une découpe réalisée dans la gaine optique.

Selon une première variante illustrée sur la figure 9, la fibre optique composite comprend quatre âmes conductrices 133a, 133b, 133c, 133d réparties de manière symétrique autour d'un coeur optique central simple 132. De préférence, le coeur optique central est un coeur asymétrique afin de pouvoir obtenir un maintien de polarisation de l'onde optique le long de sa propagation dans le coeur.

Selon une autre variante illustrée sur la figure 10, la fibre optique composite comprend une pluralité d'âmes conductrices 233 réparties de manière symétrique autour d'une pluralité de coeurs optiques 232a, 232b qui sont indépendants ou couplés entre eux. La figure 10 illustre un exemple de configurations des coeurs optiques comprenant un coeur central et une pluralité de coeurs disposés autour du coeur central.

On va décrire ci-dessous le procédé de fabrication de la fibre optique composite en référence aux figures 11 et 12. Une description plus détaillée est donnée dans le document FR3064076.

Le procédé comprend une première étape d'obtention d'une préforme composite 431 et une deuxième étape de fabrication d'une fibre optique composite 130.

Dans l'étape d'obtention d'une préforme composite optique, on obtient tout d'abord une préforme pleine ayant une forme cylindrique de section circulaire, s'étendant sur une longueur de plusieurs centimètre le long d'un axe longitudinal AA'. La préforme présente par exemple une longueur de quelques centimètres et un diamètre de l'ordre du centimètre. La préforme peut par exemple présenter une longueur de 75 mm et des bases de diamètre de 19 mm. On perce une pluralité d'ouvertures sur la base de la préforme pleine. Le perçage est par exemple réalisé mécaniquement ou avec un laser. On perce par exemple un premier trou central non débouchant 436 au centre de la première base de la préforme de diamètre de 5 mm avec un fond 436F, et deux autres trous non-débouchantes 434, 435 de diamètre de 1,5 mm placées symétriquement de part et d'autre du premier trou central non débouchant avec un fond 434F, 435F. On insère ensuite un capillaire optique 432 dans le trou central et un fil métallique 433a, 433b dans chacun des deux autres trous non débouchants. On obtient une préforme composite 431.

Les fils métalliques sont par exemple constitués d'un métal comme l'étain ou un alliage à base d'étain tel qu'étain-or. La préforme est en polymère ou en verre. Les matériaux de la préforme et des fils métalliques sont choisis pour garantir un co-fibrage.

Le capillaire est par exemple en verre présentant un seul indice de réfraction qui est supérieur à l'indice de réfraction de la préforme. Le capillaire en verre comprend une partie centrale et une partie externe qui présentent des indices de réfraction différents permettant le guidage de la lumière par réflexion interne totale.

Dans l'étape de fibrage comme l'illustre la figure 12, la préforme composite est placée dans un four pour atteindre la température de fibrage de la préforme Tf. Elle est comprise par exemple entre 300°C et 600°C, et est choisie pour être plus élevée que la température de transition vitreuse de la préforme, celle du capillaire et la température de fusion des métaux. Sous l'effet de la température de fibrage Tf, la préforme composite et le capillaire deviennent et visqueux et le fil métallique devient liquide. La préforme composite optique est étirée et affinée de façon homothétique pour former une fibre optique composite. L'étirage homothétique permet de conserver la géométrie de la préforme composite. A l'issue de cette étape, on obtient par exemple une fibre optique composite 130 de plusieurs mètres comprenant un coeur optique 132 et des âmes conductrices 133a, 133b, logées dans la gaine optique 134 de la fibre.

Le diamètre moyen de la fibre optique composite 130 est généralement compris entre 500 µm et 1 mm. Le diamètre des âmes conductrices est par exemple de l'ordre de 50 µm. Le diamètre du coeur optique 132 est par exemple de 150 µm. Les deux âmes électriques sont par exemple espacées d'une distance de l'ordre de 300 µm.

La préforme pleine, le capillaire et les deux fils métalliques étant étirés simultanément, les âmes conductrices 133a, 133b et le coeur optique 132 sont entièrement noyées dans la gaine optique 134 de la fibre optique composite.

Une variété de guides d'onde électriques et optiques comprenant une pluralité de coeurs optiques en verre et une pluralité d'âmes conductrices peuvent être utilisés dans le dispositif d'émission de plasma et de détection de signal lumineux de la présente divulgation.

### Application industrielle

Le dispositif de l'invention est compact et présente un coût de fabrication réduit. Grâce à l'utilisation d'un guide d'onde électrique et optique compact fibré, le dispositif de l'invention est utilisé dans une version endoscopique pour l'analyse d'une zone difficile d'accès. L'invention trouve ainsi des applications dans différents domaines technologiques. Dans l'industrie, le dispositif de la présente invention peut être utilisé pour contrôler la composition chimique d'un milieu gazeux confiné ou dangereux, ou d'objets divers. Dans le domaine de la santé, le dispositif de l'invention peut être par exemple utilisé pour des applications d'analyse de tissus biologiques in-vivo ainsi que d'électrostimulation tissulaire par voie endoscopique. En effet, un nouveau type de dispositif endoscopique thérapeutique permettant la stimulation, le diagnostic et/ou la manipulation in-situ des tissus peut être envisagé grâce au guide d'onde électrique et optique compact entièrement fibré. La mise en oeuvre d'une fonctionnalité combinée électrique et optique au sein des fibres proposées ici apparaît comme une solution pour atteindre cet objectif. De tels outils pourraient être utilisés, par exemple, pour délivrer une excitation lumineuse dans une zone d'intérêt tout en sondant la réponse électrochimique des cellules, ou inversement, pour imager la réponse en fluorescence à des stimuli électriques locaux de cellules marquées.

## Revendications

1. Dispositif de génération d'un plasma et de détection d'un signal lumineux (10), le plasma étant destiné à être généré au voisinage d'une zone d'étude d'un échantillon (40) et le signal lumineux provenant de ladite zone d'étude, le dispositif comprenant :
- un générateur de courant (20) ;
- une unité d'analyse (60) ;
- un guide d'onde électrique et optique (30) comprenant des moyens de transmission d'un courant électrique (33a, 33b) configurés pour générer un plasma (50) à une extrémité desdits moyens de transmission de courant électrique au voisinage de ladite zone d'étude, des moyens de détection et de transmission (32) configurés pour détecter et transmettre ledit signal lumineux provenant de ladite zone d'étude vers l'unité d'analyse (60),
ledit dispositif de génération d'un plasma et de détection d'un signal lumineux (10) **caractérisé par** une gaine optique (34), lesdits moyens de transmission de courant électrique (33a, 33b) et lesdits moyens de détection et de transmission (32) dudit signal lumineux étant logés dans la gaine optique (34).

2. Dispositif selon la revendication 1, dans lequel le guide d'onde électrique et optique (30) comprend :
- une fibre composite (31) présentant un axe principal longitudinal (AA') et comprenant au moins deux âmes conductrices électriquement (33a, 33b) et la gaine optique (34), les âmes étant placées parallèlement à l'axe longitudinal (AA') et logées dans la gaine optique (34) et configurées pour être soumises à une différence de potentiel électrique pour générer un plasma (50) aux extrémités des âmes constructrices au voisinage de la zone d'étude et
- au moins une fibre optique (32) configurée pour détecter et transmettre le signal lumineux à l'unité d'analyse (60), ladite fibre optique comprenant au moins une portion logée dans ladite gaine optique (34) et agencée parallèlement à l'axe principal longitudinal entre les deux âmes conductrices, les extrémités des âmes conductrices et de la fibre optique destinées à venir se placer au voisinage de la zone d'étude étant alignées.

3. Dispositif selon la revendication 2, dans lequel la fibre composite (31) et la fibre optique (32) sont coaxiales suivant l'axe principal longitudinal.

4. Dispositif selon la revendication 2 ou 3, dans lequel ladite fibre composite (31) comprend un trou débouchant (35) s'étendant suivant l'axe principal longitudinal, une portion de ladite fibre optique (32) étant placée dans ledit trou.

5. Dispositif selon l'une des revendications 2 à 4, dans lequel la fibre optique (32) est une fibre optique monomode ou multimode.

6. Dispositif selon l'une des revendications 2 à 5, dans lequel la fibre optique (32) est fixée à la gaine optique de la fibre composite par collage.

7. Dispositif selon la revendication 1, dans lequel le guide d'onde optique électrique et optique (131, 231) comprend :
- une fibre optique composite (131, 231) présentant un axe principal longitudinal (AA'), ladite fibre optique composite comprenant au moins deux âmes conductrices électriquement (133a, 133b ; 133c, 133d, 233), au moins un coeur optique (132, 232a, 232b) et une gaine optique (134, 234), les âmes conductrices étant placés parallèlement à l'axe longitudinal et logées dans la gaine optique et configurées pour être soumises à une différence de potentiel électrique pour générer un plasma (50) aux extrémités des âmes constructrices au voisinage de la zone d'étude, ledit au moins un coeur optique (132, 232a, 232b) étant logé dans la gaine optique (134), 234) et configuré pour détecter et transmettre le signal lumineux à l'unité d'analyse.

8. Dispositif selon la revendication 7, dans lequel le coeur optique (132, 232a, 232b) est en verre choisi parmi les verres suivants : verre de tellure, verre de phosphate, verre de boro-phosphate, verre de chalogénure.

9. Dispositif selon l'une des revendications 2 à 8, dans lequel une extrémité des âmes conductrices est connectée au générateur de courant (20) par une liaison électrique externe.

10. Dispositif selon l'une des revendications 2 à 8, dans lequel les parois latérales des âmes conductrices sont connectées au générateur de courant (20) à travers une découpe (36) de la gaine optique par une liaison électrique externe (38a, 38b).

11. Dispositif selon l'une des revendications 2 à 10, dans lequel les âmes conductrices sont en matériau métallique choisi parmi les métaux suivants : étain, un alliage à base d'étain.

12. Dispositif selon l'une des revendications 1 à 11, dans lequel la gaine optique (34, 134, 234) est en verre choisi parmi les verres suivants : verre de tellure, verre de phosphate, verre de boro-phosphate, verre de chalogénure.

13. Dispositif selon l'une des revendications 1 à 11, dans lequel la gaine optique (34, 134, 234) est en polymère choisi parmi les polymères suivants : polyéther sulfones (PES), polysulfones (PSU), Polyméthacrylate de méthyle (PMMA).

14. Dispositif selon l'une des revendications 1 à 13 étant un dispositif permettant des mesures spectroscopiques de plasma, dans lequel l'unité d'analyse (60) est un spectromètre optique pour réaliser des mesures spectroscopiques de plasma.

15. Procédé de mesures spectroscopiques de plasma mettant en oeuvre le dispositif selon la revendication 14, comprenant les étapes suivantes :
- fourniture d'un courant continu dans le guide d'onde électrique et optique pour générer aux extrémités dudit guide d'onde au voisinage de la zone d'étude un plasma ;
- détection d'un signal lumineux émis par le plasma par les extrémités duit guide d'onde électrique et optique ;
- transmission du signal lumineux par ledit guide d'onde électrique et optique vers le spectromètre ;
- analyse spectral du signal lumineux par le spectromètre.

## Patentansprüche

1. Vorrichtung zur Erzeugung eines Plasmas und zur Detektion eines Lichtsignals (10), wobei das Plasma dazu bestimmt ist, in der Nähe eines Untersuchungsbereichs einer Probe (40) erzeugt zu werden, und das Lichtsignal aus dem genannten Untersuchungsbereich stammt, die Vorrichtung umfassend:
- einen Stromgenerator (20);
- eine Analyseeinheit (60);
- einen elektrischen und optischen Wellenleiter (30) mit Mitteln zur Übertragung von elektrischem Strom (33a, 33b), die so konfiguriert sind, dass sie an einem Ende der Mittel zur Übertragung von elektrischem Strom in der Nähe des Untersuchungsbereichs ein Plasma (50) erzeugen, Erfassungs- und Übertragungsmitteln (32), die so konfiguriert sind, dass sie das Lichtsignal aus dem Untersuchungsbereich erfassen und zur Analyseeinheit (60) übertragen,
die Vorrichtung zum Erzeugen eines Plasmas und zum Erfassen eines Lichtsignals (10) **gekennzeichnet durch** eine optische Hülle (34), wobei die Mittel zum Übertragen von elektrischem Strom (33a, 33b) und die Mittel zum Erfassen und Übertragen (32) des Lichtsignals in der optischen Hülle (34) untergebracht sind.

2. Vorrichtung nach Anspruch 1, bei der der elektrische und optische Wellenleiter (30) umfasst:
- eine Verbundfaser (31) mit einer Hauptlängsachse (AA') und mit mindestens zwei elektrischen Leitern (33a, 33b) und der optischen Hülle (34), wobei die Leiter parallel zur Längsachse (AA') angeordnet und in der optischen Hülle (34) untergebracht und so konfiguriert sind, dass sie einer elektrischen Potentialdifferenz ausgesetzt werden, um an den Enden der Leiter in der Nähe des Untersuchungsbereichs ein Plasma (50) zu erzeugen, und
- mindestens eine optische Faser (32), die so konfiguriert ist, dass sie das Lichtsignal erfasst und zur Analyseeinheit (60) überträgt, wobei die optische Faser mindestens einen Abschnitt umfasst, der in der optischen Hülle (34) untergebracht ist und parallel zur Hauptlängsachse zwischen den beiden Leitern angeordnet ist, wobei die Enden der Leiter und der optischen Faser dazu bestimmt sind, in der Nähe des Untersuchungsbereichs angeordnet zu werden, wobei sie ausgerichtet sind.

3. Vorrichtung nach Anspruch 2, wobei die Verbundfaser (31) und die optische Faser (32) entlang der Hauptlängsachse koaxial sind.

4. Vorrichtung nach Anspruch 2 oder 3, wobei die Verbundfaser (31) ein Durchgangsloch (35) aufweist, das sich entlang der Hauptlängsachse erstreckt, wobei ein Abschnitt der optischen Faser (32) in dem Loch angeordnet ist.

5. Vorrichtung nach einem der Ansprüche 2 bis 4, wobei die optische Faser (32) eine optische Monomode- oder Multimode-Faser ist.

6. Vorrichtung nach einem der Ansprüche 2 bis 5, wobei die optische Faser (32) durch Kleben an der optischen Hülle der Verbundfaser befestigt ist.

7. Vorrichtung nach Anspruch 1, wobei der elektrische und optische Lichtwellenleiter (131, 231) umfasst:
- eine optische Verbundfaser (131, 231) mit einer Hauptlängsachse (AA'), wobei die optische Verbundfaser mindestens zwei elektrische Leiter (133a, 133b; 133c, 133d, 233), mindestens einen optischen Kern (132, 232a, 232b) und eine optische Hülle (134, 234) umfasst, wobei die Leiter parallel zur Längsachse angeordnet und in der optischen Hülle untergebracht sind und so konfiguriert sind, dass sie einer elektrischen Potentialdifferenz ausgesetzt werden, um an den Enden der Leiter in der Nähe des Untersuchungsbereichs ein Plasma (50) zu erzeugen, wobei der mindestens eine optische Kern (132, 232a, 232b) und eine optische Hülle (134, 234) in der Nähe des Untersuchungsbereichs angeordnet sind; (132, 232a, 232b) in der optischen Hülle (134, 234) untergebracht und so konfiguriert ist, dass er das Lichtsignal erfasst und zur Analyseeinheit weiterleitet.

8. Vorrichtung nach Anspruch 7, wobei der optische Kern (132, 232a, 232b) aus Glas besteht, das aus den folgenden Gläsern ausgewählt ist: Tellurglas, Phosphatglas, Borphosphatglas, Chalkogenidglas.

9. Vorrichtung nach einem der Ansprüche 2 bis 8, wobei ein Ende der Leiter über eine externe elektrische Verbindung mit dem Stromgenerator (20) verbunden ist.

10. Vorrichtung nach einem der Ansprüche 2 bis 8, wobei die Seitenwände der Leiter durch einen Ausschnitt (36) in der optischen Hülle über eine externe elektrische Verbindung (38a, 38b) mit dem Stromgenerator (20) verbunden sind.

11. Vorrichtung nach einem der Ansprüche 2 bis 10, wobei die Leiter aus einem metallischen Material bestehen, das aus den folgenden Metallen ausgewählt ist: Zinn, eine Legierung auf Zinnbasis.

12. Vorrichtung nach einem der Ansprüche 1 bis 11, bei der die optische Hülle (34, 134, 234) aus Glas besteht, das aus den folgenden Gläsern ausgewählt ist: Tellurglas, Phosphatglas, Borphosphatglas, Chalkogenidglas.

13. Vorrichtung nach einem der Ansprüche 1 bis 11, wobei die optische Hülle (34, 134, 234) aus einem Polymer besteht, das aus den folgenden Polymeren ausgewählt ist: Polyethersulfon (PES), Polysulfon (PSU), Polymethylmethacrylat (PMMA).

14. Vorrichtung nach einem der Ansprüche 1 bis 13, welche eine Vorrichtung ist, die spektroskopische Messungen von Plasma ermöglicht, wobei die Analyseeinheit (60) ein optisches Spektrometer zur Durchführung spektroskopischer Messungen von Plasma ist.

15. Verfahren für spektroskopische Plasmamessungen, bei dem die Vorrichtung nach Anspruch 14 eingesetzt wird, mit den folgenden Schritten:
- Bereitstellung eines Gleichstroms in dem elektrischen und optischen Wellenleiter, um an den Enden des Wellenleiters in der Nähe des Untersuchungsbereichs ein Plasma zu erzeugen;
- Erfassen eines Lichtsignals, das von dem Plasma emittiert wird, durch die Enden des elektrischen und optischen Wellenleiters;
- Übertragung des Lichtsignals durch den elektrischen und optischen Wellenleiter zum Spektrometer;
- Spektralanalyse des Lichtsignals durch das Spektrometer.

## Claims

1. A device for generating a plasma and detecting a light signal (10), the plasma being intended to be generated in the vicinity of a study zone of a sample (40) and the light signal coming from said study zone, the device comprising:
- a current generator (20);
- an analysis unit (60);
- an electrical and optical waveguide (30) comprising means for transmitting an electric current (33a, 33b) which are configured to generate a plasma (50) at one end of said means for transmitting electric current in the vicinity of said study zone, detection and transmission means (32) which are configured to detect and transmit said light signal coming from said study zone to the analysis unit (60),
said device for generating a plasma and detecting a light signal (10) **characterized by** an optical cladding (34), said means for transmitting electric current (33a, 33b) and said means (32) for detecting and transmitting said light signal being housed in the optical cladding (34).

2. The device as claimed in claim 1, wherein the electrical and optical waveguide (30) comprises:
- a composite fiber (31) having a main longitudinal axis (AA') and comprising at least two electrically conductive cores (33a, 33b) and the optical cladding (34), the cores being placed parallel to the longitudinal axis (AA') and housed in the optical cladding (34) and configured to be subjected to a difference in electrical potential in order to generate a plasma (50) at the ends of the conductive cores in the vicinity of the study zone, and
- at least one optical fiber (32) configured to detect and transmit the light signal to the analysis unit (60), said optical fiber comprising at least a portion housed in said optical cladding (34) and arranged parallel to the main longitudinal axis between the two conductive cores, the ends of the conductive cores and of the optical fiber which are intended to be placed in the vicinity of the study zone being aligned.

3. The device as claimed in claim 2, wherein the composite fiber (31) and the optical fiber (32) are coaxial along the main longitudinal axis.

4. The device as claimed in claim 2 or 3, wherein said composite fiber (31) comprises a through-hole (35) extending along the main longitudinal axis, a portion of said optical fiber (32) being placed in said hole.

5. The device as claimed in one of claims 2 to 4, wherein the optical fiber (32) is a single-mode or multimode optical fiber.

6. The device as claimed in one of claims 2 to 5, wherein the optical fiber (32) is attached to the optical cladding of the composite fiber by bonding.

7. The device as claimed in claim 1, wherein the electrical and optical waveguide (131, 231) comprises:
- a composite optical fiber (131, 231) having a main longitudinal axis (AA'), said composite optical fiber comprising at least two electrically conductive cores (133a, 133b; 133c, 133d, 233), at least one optical core (132 , 232a, 232b) and an optical cladding (134, 234), the conductive cores being placed parallel to the longitudinal axis and housed in the optical cladding and configured to be subjected to a difference in electrical potential in order to generate a plasma (50) at the ends of the conductive cores in the vicinity of the study zone, said at least one optical core (132, 232a, 232b) being housed in the optical cladding (134, 234) and configured to detect and transmit the light signal to the analysis unit.

8. The device as claimed in claim 7,wherein the optical core (132, 232a, 232b) is made of glass chosen from among the following glasses: tellurite glass, phosphate glass, borophosphate glass, chalcogenide glass.

9. The device as claimed in one of claims 2 to 8, wherein one end of the conductive cores is connected to the current generator (20) by an external electrical connection.

10. The device as claimed in one of claims 2 to 8, wherein the lateral walls of the conductive cores are connected to the current generator (20) by an external electrical connection (38a, 38b) through a cutout (36) in the optical cladding.

11. The device as claimed in one of claims 2 to 10, wherein the conductive cores are made of a metallic material chosen from among the following metals: tin, a tin-based alloy.

12. The device as claimed in one of claims 1 to 11, wherein the optical cladding (34, 134, 234) is made of glass chosen from among the following glasses: tellurite glass, phosphate glass, borophosphate glass, chalcogenide glass.

13. The device as claimed in one of claims 1 to 11, wherein the optical cladding (34, 134, 234) is made of a polymer chosen from among the following polymers: polyethersulfones (PES), polysulfones (PSU), polymethyl methacrylate (PMMA).

14. The device as claimed in one of claims 1 to 13 being a device allowing plasma spectroscopic measurements, wherein the analysis unit (60) is an optical spectrometer for carrying out plasma spectroscopic measurements.

15. A plasma spectroscopic measurement method implementing the device as claimed in claim 14, comprising the following steps:
- supplying a direct current to the electrical and optical waveguide in order to generate a plasma at the ends of said waveguide in the vicinity of the study zone;
- detecting a light signal emitted by the plasma via the ends of the electrical and optical waveguide;
- transmitting the light signal to the spectrometer via said electrical and optical waveguide;
- spectrally analyzing the light signal by means of the spectrometer.
